# EUROPÄISCHE PATENTSCHRIFT

(11) **EP 2 034 591 B1**
(45) Veröffentlichungstag und Bekanntmachung des Hinweises auf die Patenterteilung: **14.04.2010**
(21) Anmeldenummer: 07017521.1
(22) Anmeldetag: 06.09.2007
(51) Int. Cl.: H02K 11/00, H02K 3/50, H02K 19/00

(54) **Elektrodynamische Maschine mit Ständerwicklungstemperatur-Messeinrichtung**
Electrodynamic machine with stator winding temperature measuring device
Machine électrodynamique dotée d'un dispositif de mesure de la température d'enroulement du stator

(43) Veröffentlichungstag der Anmeldung: 11.03.2009
(73) Patentinhaber: SIEMENS AKTIENGESELLSCHAFT, 80333 München (DE)
(72) Erfinder: Adolf, Haiko, Dr., 99099 Erfurt (DE); Buff, Werner, Prof., 98693 Ilmenau (DE); Horna, Georg, 98708 Gehren (DE)

(56) Entgegenhaltungen:
- DE-A1- 1 928 738
- DE-A1- 10 241 428
- DE-A1-102004 048 928
- DE-B- 1 207 995

## Beschreibung

Die Erfindung betrifft eine elektrodynamische Maschine, umfassend einen Ständerwickelkopf, wobei der Ständerwickelkopf mehrere Stromleiter umfasst, die ein elektrisch leitfähiges Stromleitungsmaterial aufweisen, wobei auf dem Stromleiter ein Temperaturmesssensor angebracht ist.

Ein Turbogenerator als Ausführungsform einer elektrodynamischen Maschine wird zur Erzeugung von elektrischer Energie eingesetzt. Dabei wird ein Strom durch elektromagnetische Induktion in eine so genannte Ständerwicklung induziert. Die Ständerwicklung weist einen Ständerwickelkopf auf, der durch den induzierten Strom erwärmt wird. Es kann durchaus vorkommen, dass die Temperatur am Ständerwickelkopf einen Temperaturgrenzwert überschreitet, wodurch eine Schädigung des Ständerwickelkopfs dann nicht mehr auszuschließen ist. Um Schäden am Ständerwickelkopf zu vermeiden, wird die Temperatur des Ständerwickelkopfs mittels Thermopapieren gemessen. Der Ständerwickelkopf umfasst mehrere Stromleiter, wobei die Stromleiter ein elektrisch leitfähiges Stromleitungsmaterial aufweisen. Dieses elektrisch leitfähige Stromleitungsmaterial wird üblicherweise mit einer Isolierschicht versehen. Bei bisherigen Temperaturmessverfahren werden die Thermopapiere direkt auf die äußere Isolierschicht des Stromleitungsmaterials aufgebracht. Allerdings ist diese Temperaturmessung dadurch beeinträchtigt, dass ein zusätzlicher Temperaturabfall über der schlecht wärmeleitfähigen Isolierung entsteht.

Ein weiteres bekanntes Temperaturmessverfahren ist das faseroptische Messverfahren. Allerdings ist dieses faseroptische Messverfahren teuer und aufwändig in einer Installationsphase. Weitere Temperaturmesseinrichtungen sind aus

DE 10241428 A1, DE 1928738, DE 1207995, und DE 102004048928 A1 bekannt.

Wünschenswert wäre es, eine zuverlässige Temperaturmessung zu haben, mit der die Temperatur des Stromleitungsmaterials zuverlässig und kontinuierlich erfasst werden kann.

An dieser Stelle setzt die Erfindung an, deren Aufgabe es ist, eine elektrodynamische Maschine anzugeben, die einen Ständerwickelkopf aufweist, wobei die Temperatur des Ständerwickelkopfs zuverlässig gemessen werden kann.

Gelöst wird diese Aufgabe durch eine erfindungsgemäße elektrodynamische Maschine gemäß Anspruch 1. Vorteilhafte Ausführungsformen der Erfindung sind Gegenstand der abhängigen Ansprüche 2 - 6.

Die Erfindung geht somit von dem Ansatz aus, dass ein auf die Isolierschicht angebrachter Temperatursensor oder aufgebrachtes Thermopapier eine verfälschte Temperatur misst und sozusagen nicht die tatsächliche Temperatur des Stromleitungsmaterials erfasst und sendet. Der Erfindung liegt der Gedanke zugrunde, dass ein Temperaturmesssensor direkt, d. h. ohne eine störende Isolierschicht beispielsweise, auf dem Stromleitungsmaterial aufgebracht ist. Dadurch ist eine zuverlässige Messung der Temperatur des Stromleitungsmaterials möglich, da keine störende Isolierschicht die Temperaturmessung verfälscht.

Als Temperaturmesssensoren können sogenannte SAW-Sensoren eingesetzt werden. SAW-Sensoren benötigen keine eigene Stromversorgung und werden passiv betrieben. Des Weiteren sind SAW-Sensoren **dadurch gekennzeichnet, dass** die charakteristische Frequenz der Sensorelemente (z.B. die Resonanzfrequenz von SAW-Resonatoren) durch äußere Einflüsse (z.B. die Temperatur) verändert werden. Diese Frequenzverschiebung kann über ein Funksignal ausgelesen werden, so dass das Sensorelement selbst weder eine elektronische Schaltung noch eine eigene Spannungsversorgung benötigt. Damit unterscheiden sich solche passiven Sensoren von anderen herkömmlichen Sensoren.

In einer vorteilhaften Weiterbildung der Erfindung ist der Temperaturmesssensor auf dem Stromleitungsmaterial gelötet. Dadurch ist eine kostengünstige und einfache Möglichkeit gegeben, den Temperaturmesssensor mechanisch fest mit dem Stromleitungsmaterial zu verbinden. Außerdem wird über eine Lötung ein sehr guter thermischer Kontakt zwischen dem Temperaturmesssensor und dem Stromleitungsmaterial hervorgebracht. Somit ist kein Temperaturabfall zu befürchten, was dazu führt, dass die Temperatur des Stromleitungsmaterials zuverlässig und exakt wiedergegeben wird.

Erfindungsgemäß ist der Temperaturmesssensor als ein Oberflächenwellensensor ausgebildet. Die Oberflächenwellensensoren zeichnen sich dadurch aus, dass sie über eine Antenne mit einem elektrischen Impuls angeregt werden und mittels eines zur Chiptemperatur proportionalen Frequenzsignals antwortet. Sensoren, die mit akustischen Oberflächenwellen arbeiten sind im Gegensatz zu herkömmlichen Temperatursensoren weitgehend unempfindlich gegen äußere elektrische und magnetische Felder. Hierdurch wird verhindert, dass störende und verfälschende Signale auf dem Signalweg eingekoppelt werden. Dies ist bei den auftretenden hohen elektrischen Spannungen und den sehr hohen magnetischen Feldstärken von besonderer Bedeutung.

Vorteilhafterweise ist der Temperaturmesssensor zum Erfassen der Temperatur des Stromleitungsmaterials als Temperatursignal ausgebildet und eine Empfangseinrichtung vorgesehen, wodurch die Empfangseinrichtung die Temperatursignale empfängt. Dadurch ist es möglich, mehrere Temperaturmesssensoren auf dem Ständerwickelkopf anzuordnen und die jeweils erfassten Temperatursignale zu einer Empfangseinrichtung zu senden. Somit entfällt ein Ablesen eines jeden einzelnen Temperaturmesssensors.

Der Temperatursensor ist als Oberflächenwellenresonator ausgebildet. Er hat eine bestimmte konstruktiv vorgegebene Resonanzfrequenz, deren Veränderung das Temperaturmesssignal darstellt. Es ist dabei möglich, mehrere Resonatoren mit unterschiedlicher Resonanzfrequenz gleichzeitig auszulesen.

In einer vorteilhaften Weiterbildung ist der Temperaturmesssensor zum drahtlosen Senden der Temperatursignale und die Empfangseinrichtung zum drahtlosen Empfang der Temperatursignale ausgebildet. Durch die drahtlose Übertragung der Temperaturmesssignale entfallen aufwändige und fehleranfällige Verdrahtungen des Ständerwickelkopfes. Die Empfangseinrichtung kann dadurch an einer optimalen Stelle platziert werden, an der die Temperaturmesswerte abgelesen werden können bzw. ausgelesen werden können.

Da die Funksignale mühelos die elektrische Isolation des Ständerwicklerkopfes durchdringen können, wird die konstruktiv günstige Isolation des Ständerwicklerkopfes durch das Temperaturmesssystem nicht beeinflusst.

In einer weiteren vorteilhaften Weiterbildung ist die Empfangseinrichtung als Dipolantenne ausgebildet.

Vorteilhafterweise umfasst die elektrodynamische Maschine ein geerdetes Gehäuse, auf dem die Empfangseinrichtung angeordnet ist.

Der Temperaturmesssensor und die Empfangseinrichtung sind derart ausgebildet, dass mehrere Temperatursignale gleichzeitig übertragen werden können.

Im Folgenden wird ein Ausführungsbeispiel der Erfindung anhand zweier Figuren dargestellt, wobei Komponenten mit gleicher Wirkungsweise gleiche Bezugszeichen aufweisen. Es zeigen:
- Figur 1: eine Darstellung eines Generators,
- Figur 2: eine Darstellung eines Ständerwickelkopfes.

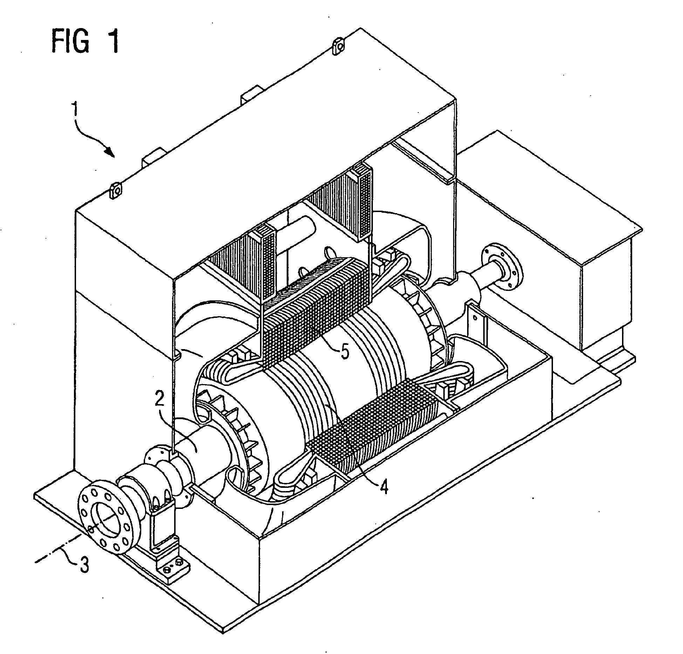

Die Figur 1 zeigt einen Turbogenerator 1 als Ausführungsform einer elektrodynamischen Maschine. Ein weiteres Beispiel für eine elektrodynamische Maschine ist ein elektrischer Motor. Der Turbogenerator 1 umfasst einen Läufer 2, auf dem eine Läuferwicklung 4 angeordnet ist. Der Läufer 2 ist um eine Rotationsachse 3 drehbar gelagert. Um die Läuferwicklung 4 ist eine Ständerwicklung 5 angeordnet.

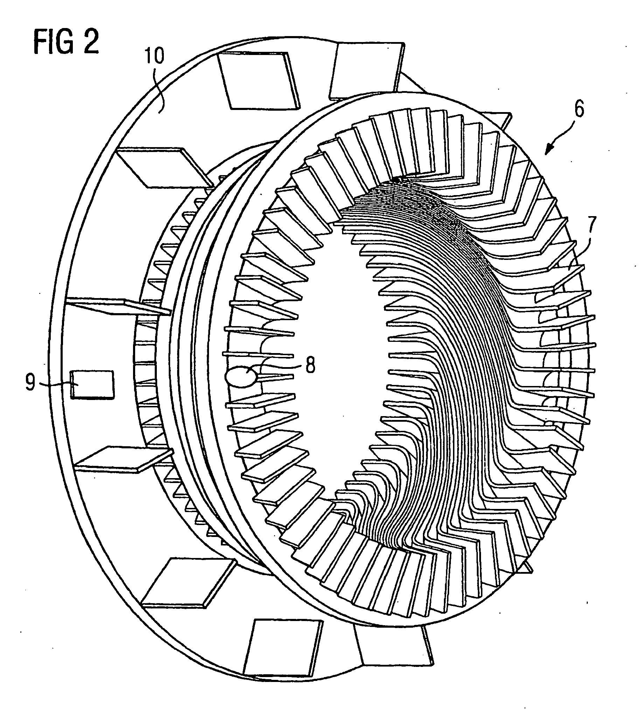

Die Figur 2 zeigt einen Ausschnitt des Turbogenerators 1 aus Figur 1. Es ist ein Ständerwickelkopf 6 dargestellt, der an den Enden der Ständerwicklung 5 angeordnet ist. Der Ständerwickelkopf 6 umfasst mehrere Stromleiter 7. Aus Gründen der Übersichtlichkeit ist in der Figur 2 lediglich ein Stromleiter mit dem Bezugszeichen 7 versehen. Der Stromleiter 7 ist aus einem elektrisch leitfähigen Stromleitungsmaterial ausgebildet. Als stromleitungsfähiges Material kann beispielsweise Kupfer verwendet werden. Auf den Stromleiter 7 wird ein Temperaturmesssensor 8 mittels einer Lötung direkt auf das Stromleitungsmaterial aufgebracht. Zwischen dem Temperaturmesssensor 8 und dem Stromleitungsmaterial befindet sich keine Isolierschicht, sondern lediglich die Lötung.

Der Stromleiter 7 mit dem Temperaturmesssensor 8 wird anschließend, nach der Lötung, mittels einer Isolierschicht geschützt. Der Temperaturmesssensor 8 ist als ein Oberflächenwellensensor 8 ausgebildet. Des Weiteren ist der Temperaturmesssensor 8 zum Erfassen der Temperatur des Stromleitungsmaterials als Temperatursignal ausgebildet. Der Turbogenerator 1 weist des Weiteren eine Empfangseinrichtung 9 auf, die zum Empfangen der Temperatursignale ausgebildet ist. Der Temperaturmesssensor 8 wird hierbei zum drahtlosen Senden der Temperatursignale und die Empfangseinrichtung 9 zum drahtlosen Empfangen der Temperatursignale ausgebildet. Alternativ dazu kann die Übertragung auch über eine Drahtverbindung zwischen dem Temperaturmesssensor 8 und der Empfangseinrichtung 9 erfolgen. Denkbar ist ebenso eine redundante Temperaturübertragung zwischen dem Temperaturmesssensor und der Empfangseinrichtung 9 mittels einer drahtlosen Übertragung sowie über eine Übertragung mittels eines Drahtes.

Die Empfangseinrichtung 9 wird hierbei als Dipolantenne ausgebildet. Des Weiteren kann die Empfangseinrichtung 9 an einem geerdeten Gehäuse 10 des Turbogenerators 1 aufgebracht werden. Durch diese Vorrichtung ist eine drahtlose Temperaturüberwachung der Ständerwicklung 5 von elektrodynamischen Maschinen 1 möglich, wodurch eine kostengünstige und hochgenaue Temperaturmessung von isolierten spannungsführenden Bauteilen, wie z. B. den Stromleitern in einem Ständerwickelkopf erreicht wird.

## Patentansprüche

1. Elektrodynamische Maschine (1),
umfassend einen Ständerwickelkopf (6),
wobei der Ständerwickelkopf (6) mehrere Stromleiter (7) umfasst, die elektrisch leitfähiges Stromleitungsmaterial aufweisen,
wobei auf dem Stromleiter (7) ein Temperaturmesssensor (8) angeordnet ist,
wobei der Temperaturmesssensor (8) direkt auf dem Stromleitungsmaterial aufgebracht ist,
**dadurch gekennzeichnet, dass**
der Temperaturmesssensor (8) als ein Oberflächenwellensensor ausgebildet ist.

2. Elektrodynamische Maschine (1) nach Anspruch 1,
wobei der Temperaturmesssensor (8) auf dem Stromleitungsmaterial gelötet ist.

3. Elektrodynamische Maschine (1) nach Anspruch 1 oder 2,
wobei der Temperaturmesssensor (8) zum Erfassen der Temperatur des Stromleitungsmaterials als Temperatursignal ausgebildet ist und
eine Empfangseinrichtung (9) vorgesehen ist, die die Temperatursignale empfängt.

4. Elektrodynamische Maschine (1) nach Anspruch 3,
wobei der Temperaturmesssensor (8) zum drahtlosen Senden der Temperatursignale und die Empfangseinrichtung (9) zum drahtlosen Empfangen der Temperatursignale ausgebildet ist.

5. Elektrodynamische Maschine (1) nach Anspruch 3 oder 4,
wobei die Empfangseinrichtung (9) als Dipolantenne ausgebildet ist.

6. Elektrodynamische Maschine (1) nach Anspruch 3, 4 oder 5,
wobei ein geerdetes Gehäuse (10) vorgesehen ist, auf dem die Empfangseinrichtung (9) aufgebracht ist.

## Claims

1. Electrodynamic machine (1),
having a stator end winding (6),
wherein the stator end winding (6) has a plurality of electrical conductors (7) which have electrically conductive current-carrying material,
wherein a temperature measurement sensor (8) is arranged on the electrical conductor (7),
wherein the temperature measurement sensor (8) is fitted directly to the current-carrying material,
**characterized in that**
the temperature measurement sensor (8) is in the form of a surface acoustic wave sensor.

2. Electrodynamic machine (1) according to Claim 1,
wherein the temperature measurement sensor (8) is soldered to the current-carrying material.

3. Electrodynamic machine (1) according to Claim 1 or 2,
wherein the temperature measurement sensor (8) is designed to detect the temperature of the current-carrying material as a temperature signal, and
a receiving device (9) is provided, which receives the temperature signals.

4. Electrodynamic machine (1) according to Claim 3,
wherein the temperature measurement sensor (8) is designed for wire-free transmission of the temperature signals, and the receiving device (9) is designed for wire-free reception of the temperature signals.

5. Electrodynamic machine (1) according to Claim 3 or 4,
wherein the receiving device (9) is in the form of a dipole antenna.

6. Electrodynamic machine (1) according to Claim 3, 4 or 5,
wherein an earthed housing (10) is provided, to which the receiving device (9) is fitted.

## Revendications

1. Machine ( 1 ) électrodynamique,
comprenant une tête ( 6 ) d'enroulement de stator,
dans laquelle la tête ( 6 ) d'enroulement du stator comprend plusieurs conducteurs ( 7 ) de courant, qui comportent du matériau de conduction du courant conducteur de l'électricité,
dans laquelle un capteur ( 8 ) de température est disposé sur le conducteur ( 7 ) de courant,
dans laquelle le capteur ( 8 ) de mesure de la température est disposé directement sur le matériau de conduction du courant,
**caractérisée en ce que**
le capteur ( 8 ) de mesure de la température est constitué en capteur à ondes de surface.

2. Machine ( 1 ) électrodynamique suivant la revendication 1,
dans laquelle le capteur ( 8 ) de mesure de la température est brasé sur le matériau de conduction du courant.

3. Machine ( 1 ) électrodynamique suivant la revendication 1 ou 2,
dans laquelle le capteur ( 8 ) de mesure de la température est constitué pour relever la température du matériau de conduction du courant sous la forme d'un signal de température et
il est prévu un dispositif ( 9 ) de réception, qui reçoit les signaux de température.

4. Machine ( 1 ) électrodynamique suivant la revendication 3,
dans laquelle le capteur ( 8 ) de mesure de la température est constitué pour l'envoi sans fil des signaux de température et le dispositif ( 9 ) de réception pour la réception sans fil des signaux de température.

5. Machine ( 1 ) électrodynamique suivant la revendication 3 ou 4,
dans laquelle le dispositif ( 9 ) de réception est constitué sous la forme d'une antenne dipôle.

6. Machine ( 1 ) électrodynamique suivant la revendication 3, 4 ou 5,
dans laquelle il est prévu un boîtier ( 10 ), sur lequel le dispositif ( 9 ) de réception est appliqué.
